# FASCICULE DE BREVET EUROPEEN

(11) **EP 1 777 129 B1**
(45) Date de publication et mention de la délivrance du brevet: **01.06.2011**
(21) Numéro de dépôt: 05292195.4
(22) Date de dépôt: 19.10.2005
(51) Int. Cl.: B60R 25/10

(54) **Système d'accés à télécommande pour véhicule automobile**
Zugangssystem mittels Fernbedienung für Fahrzeuge
Access system with remote control for vehicles

(43) Date de publication de la demande: 25.04.2007
(73) Titulaire: Delphi Technologies, Inc., Troy, MI 48007 (US)
(72) Inventeur: Deroubaix, Nicolas, 94120 Fontenay sous Bois (FR); Marier, Nicolas, 77410 Fresnes sur Marne (FR); Poitelon, Olivier, 91540 Mennecy (FR); Vermersch, Jérôme, 59286 Roost-Warendin (FR); Coudre, Jérôme, 77700 Bailly-Romainvilliers (FR); Dubois, Nathalie, 93330 Neuilly sur Marne (FR); Le Moullec, Olivier, 93340 Le Raincy (FR)
(74) Mandataire: Robert, Vincent

(56) Documents cités:
- WO-A-2004/068424
- DE-A1- 10 046 571
- DE-A1- 10 142 967
- DE-A1- 10 235 132
- US-A1- 2002 098 835
- US-A1- 2004 030 919
- US-A1- 2004 090 315

## Description

La présente invention se rapporte à un système d'accès à télécommande pour véhicule automobile. Plus particulièrement, la présente invention se rapporte à un tel système dans lequel la télécommande inclut des moyens de signalisation pour signaler à l'utilisateur l'état actuel de la ou des serrure(s) du véhicule.

Dans le domaine des systèmes d'accès pour véhicule, on connaît les systèmes dits « à télécommande » et les systèmes dits « mains libres ».

Dans un système mains libres, l'utilisateur porte un dispositif d'identification qui communique avec une unité d'accès embarquée pour assurer le verrouillage et le déverrouillage des serrures du véhicule, sans que l'utilisateur ne doive exercer une action positive, comme par exemple manipuler le dispositif d'identification. Pour assurer un fonctionnement correct et sûr d'un tel système, il est nécessaire de localiser le dispositif d'identification par rapport au véhicule. Cela implique des contraintes sur le protocole de communication utilisé entre le dispositif d'identification et l'unité d'accès, qui doit notamment être protégé contre les tentatives de piratage. D'autre part, cela implique des contraintes sur la portée de la communication, qui doit être limitée par exemple à 30 mètres, et sur l'agencement des antennes, qui doit être complexe et coûteux.

Dans un système à télécommande, l'utilisateur est responsable du verrouillage ou déverrouillage des ouvrants. Par exemple, l'utilisateur porte sur lui une télécommande équipée de boutons permettant de commander le verrouillage et le déverrouillage. Une situation habituelle dans un tel système est que l'utilisateur se demande s'il a verrouillé ou déverrouillé les ouvrants. Pour cela, dans certains systèmes d'accès à télécommande, la télécommande est apte à émettre une indication visuelle de l'état verrouillé ou déverrouillé des ouvrants.

Par exemple, le document US-2004/0178891-A1 décrit un système d'accès à télécommande pour véhicule. Dans ce système, une unité de véhicule et une télécommande communiquent pour échanger des messages de commande de verrouillage et de déverrouillage des serrures et des messages incluant une information d'état serrure. La télécommande présente des indicateurs pour indiquer l'état des serrures. La télécommande ne comprend pas de clé mécanique pour actionner les serrures. Au contraire, le système décrit est destiné à être vendu indépendamment du véhicule et installé sur celui-ci par l'acheteur sous la forme d'un système supplémentaire autonome qui se juxtapose aux systèmes embarqués préexistants du véhicule. Pour pouvoir accéder à son véhicule même en cas de disfonctionnement de la télécommande ou dans le cas où la batterie de la télécommande serait déchargée, l'utilisateur doit porter sur lui à la fois la télécommande et la clé mécanique originale du véhicule. De plus, si le véhicule était à l'origine déjà équipé d'un système d'accès à télécommande, alors deux systèmes d'accès peuvent agir en parallèle sur les serrures. Dans ce cas, il peut se produire des problèmes de compatibilité des systèmes, par exemple en ce que l'unité de véhicule du système supplémentaire peut considérer que les serrures sont verrouillées alors qu'elles sont déverrouillées ou inversement, et envoyer un message incluant une information d'état serrure incorrecte à la télécommande. Enfin, dans le système connu, il est nécessaire d'appuyer sur un bouton « statut » pour que l'unité de véhicule envoie un message incluant l'information d'état serrure à la télécommande. Dans un mode de réalisation, la communication entre la télécommande et l'unité d'accès est de portée limitée. De se fait, si l'utilisateur n'a pas appuyé sur le bouton « statut » avant de s'éloigner du véhicule d'une distance supplémentaire à cette portée, il lui est impossible de connaître l'état actuel des serrures sauf à revenir à proximité du véhicule pour activer le bouton « statut ». La solution proposée dans le système connu pour remédier à ce problème est d'établir une communication par téléphonie mobile entre l'unité d'accès et la télécommande. Cette solution nécessite des composants supplémentaires sur la télécommande, conduisant à des inconvénients en termes de coût et d'encombrement. De plus, une communication par téléphonie mobile est généralement payante.

D'autres systèmes d'accès à télécommande pour véhicule sont décrits dans les documents WO2004/068424A1 et US2004/0090315A.

L'invention a pour but de proposer un système d'accès à télécommande pour véhicule, ne présentant pas au moins certains des inconvénients de l'art antérieur.

Pour cela, l'invention fournit un système d'accès à télécommande pour véhicule automobile comportant au moins un ouvrant incluant une serrure, des moyens de commande de serrure embarqués reliés à ladite serrure, des moyens de télécommunication embarqués reliés auxdits moyens de commande de serrure embarqués, et une télécommande destinée à être portée par un utilisateur, ladite télécommande incluant des moyens de télécommunication de télécommande aptes à établir une communication bi-directionnelle avec lesdits moyens de télécommunication embarqués, au moins un organe de commande actionnable par un utilisateur pour provoquer l'émission de messages de télécommande incluant au moins des messages de commande de serrure par lesdits moyens de télécommunication de télécommande à destination desdits moyens de télécommunication embarqués,
lesdits moyens de commande de serrure embarqués étant aptes à actionner ladite serrure dans un état verrouillé ou dans un état déverrouillé en réponse à la réception d'un dit message de commande de serrure,
ledit système comportant des moyens de commande de réponse embarqués aptes à provoquer l'émission par lesdits moyens de télécommunication embarqués à destination desdits moyens de télécommunication de télécommande d'une information d'état serrure relative à l'état actuel de ladite serrure en réponse à la réception d'un dit message de télécommande,
ladite télécommande incluant des moyens de signalisation aptes à émettre un signal perceptible par ledit utilisateur en fonction de ladite information d'état serrure pour signaler l'état actuel de la serrure, caractérisé par le fait que
lesdits moyens de commande de réponse sont reliés à une instrumentation embarquée de manière à recevoir des informations de fonctionnement relatives à au moins un paramètre de fonctionnement du véhicule,
lesdits moyens de commande de réponse embarqués étant aptes à provoquer l'émission par lesdits moyens de télécommunication embarqués à destination desdits moyens de télécommunication de télécommande desdites informations de fonctionnement en réponse à la réception d'au moins certains desdits messages de télécommande,
lesdits moyens de signalisation étant aptes à émettre un signal perceptible par ledit utilisateur en fonction desdites informations de fonctionnement pour signaler la valeur actuelle dudit au moins un paramètre de fonctionnement,
lesdits moyens de commande de réponse embarqués étant aptes à provoquer l'émission par lesdits moyens de télécommunication embarqués à destination desdits moyens de télécommunication de télécommande d'au moins ladite information d'état serrure sous la forme d'un message d'acquittement en réponse à la réception d'un dit message de commande de serrure.

Grâce à ces caractéristiques, comme un message d'acquittement incluant l'information d'état serrure est envoyé après la réception de chaque message de commande de serrure, l'utilisateur dispose sur la télécommande d'une information d'état serrure actualisée et donc correcte, même lorsqu'il se trouve éloigné du véhicule d'une distance supérieure à la portée de la communication bi-directionnelle. En effet, étant donné que la mise à jour de l'information d'état serrure a lieu après chaque réception d'un message de commande de serrure, l'utilisateur peut être informé par la télécommande de l'information d'état serrure actualisée. L'utilisateur peut aussi être informé par la même télécommande de la valeur d'au moins un paramètre de fonctionnement du véhicule sur réception du message d'acquittement et/ou sur réception d'un autre message de réponse.

On sait que le rayon d'action dans lequel les messages de commande de serrure sont exécutés doit nécessairement être limité pour des raisons de sécurité. Par exemple, ce rayon d'action est limité à moins de 30 m pour s'assurer que l'utilisateur voit le véhicule quand un message de commande de serrure est exécuté. Comme le message d'acquittement est émis en réponse à un message de commande de serrure, il n'est pas nécessaire de munir la communication montante du véhicule vers la télécommande d'une portée supérieure à la communication descendante de la télécommande vers le véhicule. En d'autres termes, le système peut être mis en oeuvre efficacement avec des moyens de communication de portée relativement faible, par exemple environ 30 m ou moins. Inversement, il est aussi possible de prévoir une portée plus grande que le rayon d'action susmentionné pour certaines communications montantes et descendantes, par exemple pour un message de requête d'information, le cas échéant, et pour le message d'actualisation d'information correspondant, le cas échéant.

Au sens de l'invention, un paramètre de fonctionnement du véhicule désigne toute information qui peut être mise à disposition d'un ordinateur de bord du véhicule, notamment toute information susceptible d'être affichée sur le tableau de bords du véhicule ou sur un écran de l'ordinateur de bord ainsi que toute information calculée ou utilisée par un calculateur embarqué du véhicule, notamment le contrôleur ABS ou l'unité de commande moteur.

Par exemple, ledit au moins un paramètre de fonctionnement est choisi dans le groupe constitué d'un état ouvert ou fermé dudit au moins un ouvrant, un état ouvert ou fermé d'une vitre, un état ouvert ou fermé d'un toit amovible, un niveau d'huile, une pression de pneu, un kilométrage du véhicule, un niveau de carburant, une consommation moyenne, une autonomie restante, une température du véhicule, un état actif ou inactif d'un système de climatisation, une relation entre une température de l'habitacle et une consigne de température d'un système de climatisation, un état d'un capteur d'intrusion ou de présence, un état de pression d'un pneu, un niveau de liquide de nettoyage des vitres, un état allumé ou éteint d'un organe d'émission de lumière, un état démarré ou arrêté du moteur, une position géographique du véhicule, un état d'un avertisseur sonore, et un état de la batterie du véhicule.

De préférence, ledit message d'acquittement inclut au moins une partie desdites informations de fonctionnement.

Ainsi, la valeur actualisée et donc correcte dudit au moins un paramètre de fonctionnement est envoyée à la télécommande après la réception de chaque message de commande de serrure. S'il a actionné ledit au moins un organe de commande pour provoquer l'envoi d'un message de commande de serrure, l'utilisateur dispose sur la télécommande des informations de fonctionnement actualisées et donc correctes. Normalement, ces informations, ou du moins certaines d'entre elles comme un niveau de carburant, ne sont pas susceptibles de changer lorsque l'utilisateur a quitté le véhicule. Ainsi, l'utilisateur possède sur la télécommande des informations qui restent correctes lorsqu'il se trouve éloigné du véhicule d'une distance supérieure à la portée de la communication bi-directionnelle. Si, comme il est recommandé et habituel, l'utilisateur commande systématiquement le verrouillage de la serrure avant de s'éloigner du véhicule, les informations de fonctionnement seront systématiquement actualisées.

Avantageusement, ladite télécommande inclut au moins un organe de commande de serrure actionnable par un utilisateur pour provoquer l'émission dudit au moins un message de commande de serrure par lesdits moyens de télécommunication de télécommande à destination desdits moyens de télécommunication embarqués, et un organe de commande de requête d'information actionnable par un utilisateur pour provoquer l'émission d'un message de requête d'information par lesdits moyens de télécommunication de télécommande à destination desdits moyens de télécommunication embarqués, ledit message de requête d'information étant distinct dudit au moins un message de commande de serrure, lesdits moyens de commande de réponse embarqués étant aptes à provoquer l'émission par lesdits moyens de télécommunication embarqués à destination desdits moyens de télécommunication de télécommande d'un message d'actualisation d'information incluant au moins une partie desdites informations de fonctionnement en réponse à la réception dudit message de requête d'information.

Ainsi, il est possible d'actualiser les informations de fonctionnement dans la télécommande sans provoquer le verrouillage ou le déverrouillage de la serrure. Dans ce cas, on peut choisir d'implémenter la communication du message de requête d'information et du message d'actualisation d'information avec une plus longue portée, par exemple environ 80 m à 100 m.

Selon un mode de réalisation particulier, ladite télécommande inclut un organe de commande de verrouillage de serrure actionnable par un utilisateur pour provoquer l'émission d'un message de commande de verrouillage de serrure par lesdits moyens de télécommunication de télécommande à destination desdits moyens de télécommunication embarqués, et un organe de commande de déverrouillage de serrure actionnable par un utilisateur pour provoquer l'émission d'un message de commande de déverrouillage serrure par lesdits moyens de télécommunication de télécommande à destination desdits moyens de télécommunication embarqués.

De préférence, ledit message d'actualisation d'information inclut ladite information d'état serrure.

Ainsi, il est possible d'actualiser l'information d'état serrure dans la télécommande sans provoquer le verrouillage ou le déverrouillage de la serrure.

Avantageusement, ladite télécommande inclut une clé mécanique apte à coopérer avec ladite serrure pour verrouiller et/ou déverrouiller ladite serrure et/ou avec un contacteur d'allumage du véhicule, lesdits moyens de commande de réponse embarqués étant aptes à provoquer l'émission par lesdits moyens de télécommunication embarqués à destination desdits moyens de télécommunication de télécommande d'au moins ladite information d'état serrure sous la forme d'un message d'acquittement en réponse à un verrouillage ou un déverrouillage de ladite serrure par ladite clé mécanique.

Grâce à ces caractéristiques, l'utilisateur ne doit porter qu'un seul dispositif, à savoir la télécommande, pour pouvoir prendre connaissance de l'état actuel de la serrure et actionner la serrure avec la clé mécanique en cas de nécessité. En conséquence, un seul système d'accès est suffisant pour être informé de l'état actuel de la serrure et disposer d'une clé mécanique. On évite ainsi les problèmes de compatibilité entre plusieurs systèmes dont les risques d'envoi d'une information d'état serrure incorrecte. De plus, l'information d'état serrure sera mise à jour dans la télécommande, même quand les serrures sont actionnées avec la clé mécanique.

De préférence, le système d'accès comporte un organe d'anti-démarrage embarqué relié à une unité de commande moteur, ladite unité de commande moteur étant apte à empêcher ou autoriser le démarrage du moteur du véhicule en fonction d'un état dudit organe d'anti-démarrage embarqué, ladite télécommande incluant un organe d'anti-démarrage de télécommande apte à coopérer par une liaison sans fil avec ledit organe d'anti-démarrage embarqué pour modifier l'état dudit organe d'anti-démarrage embarqué.

Grâce à ces caractéristiques, la sécurité du système d'accès est améliorée. En effet dans ce cas, il est très difficile pour un éventuel voleur de faire démarrer le moteur sans disposer de la télécommande.

Selon un mode de réalisation particulier, lesdits moyens de télécommunication embarqués incluent au moins une antenne d'émission et de réception reliée à un émetteur-récepteur radiofréquence agencé sur un module électronique situé le long de la colonne de direction dudit véhicule.

Un tel positionnement permet de couvrir un champ de rayonnement étendu avec une antenne relativement simple. De plus, le module électronique peut comprendre d'autres éléments relatifs par exemple à la commande des essuie-glaces, des phares, de l'auto-radio,... du véhicule. Rassembler ces éléments et l'émetteur-récepteur sur un même module permet une installation aisée dans le véhicule. De plus, dans le cas d'un modèle de véhicule présentant déjà un module électronique situé le long de la colonne de direction, rajouter un émetteur récepteur sur ce module n'implique pas de changement significatif à la conception du modèle de véhicule.

De préférence, lesdits moyens de télécommunication de télécommande incluent une antenne d'émission et une antenne de réception reliées à un émetteur-récepteur radiofréquence.

Ainsi, il est possible de concevoir l'antenne d'émission et l'antenne de réception indépendamment l'une de l'autre pour optimiser leurs propriétés, par exemple leur sensibilité, fréquence, taille,...

Selon un mode de réalisation particulier, ladite communication bi-directionnelle est effectuée avec une fréquence porteuse comprise dans la bande UHF.

Une telle bande de fréquence présente un compromis intéressant entre taille des antennes et portée. A une fréquence plus basse, il est nécessaire d'utiliser des antennes de tailles plus importantes. A une fréquence plus haute, des problèmes de réflexions multiples limitent la portée de la communication.

De préférence, ledit au moins un élément de signalisation est choisi dans le groupe constitué par un écran d'affichage, une diode électroluminescente, un générateur de vibration, un générateur de son.

Avantageusement, les moyens de commande de serrure et les moyens de commande de réponse sont réalisés sous la forme d'un ou plusieurs module(s) électronique(s) relié(s) à un réseau de communication embarqué du véhicule.

Une telle disposition facilite l'acquisition des informations de fonctionnement et des informations d'état serrure, qui peuvent être mise à disposition par l'instrumentation et l'électronique embarquée du véhicule (capteur divers, contrôleur ABS, contrôleur moteur) sur le réseau de communication embarqué. Notamment, il est possible d'implémenter ces moyens de commande au moins en partie dans des unités de commande préexistantes réalisant déjà d'autres fonctions dans le véhicule. Par exemple, une unité centrale de commande, réalisant le contrôle d'au moins une fonction parmi la supervision d'une unité de contrôle moteur, la gestion de l'affichage sur le tableau de bord ou la supervision du système de climatisation, inclut au moins une partie desdits moyens de commande de serrure et au moins une partie desdits moyens de commande de réponse, ladite unité centrale de commande étant reliée à ladite instrumentation embarquée par le réseau de communication embarqué.

Selon un mode de réalisation, ledit réseau embarqué est un réseau multiplexé.

De préférence, lesdits moyens de commande de réponse embarqués sont aptes à provoquer l'émission par lesdits moyens de télécommunication embarqués à destination desdits moyens de télécommunication de télécommande de messages de réponse incluant au moins une partie desdites informations de fonctionnement en réponse à un changement de valeur d'un desdits paramètres de fonctionnement.

Ainsi, l'utilisateur peut être avertit par la télécommande de ce changement de valeur de paramètre sans avoir à manipuler la télécommande. Dans ce cas, la communication peut présenter une portée plus importante, par exemple 300 m. En effet, seule la communication montante intervient, pour laquelle l'utilisation d'énergie n'est pas problématique.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue d'ensemble en perspective d'un véhicule équipé d'un système d'accès à télécommande selon l'invention ;
- la figure 2 est une vue schématique du véhicule de la figure 1 ;
- la figure 3 est une vue en perspective éclatée d'un module de colonne de direction comprenant un module électronique compris dans le système d'accès du véhicule de la figure 1 ;
- la figure 4 est un schéma de principe du module électronique de la figure 3 ;
- la figure 5 est un schéma de principe de la télécommande du système d'accès du véhicule de la figure 1 ;
- la figure 6 est une vue en perspective de la télécommande de la figure 5 ; et
- la figure 7 représente une trame utilisée dans la communication bi-directionnelle du système d'accès du véhicule de la figure 1.

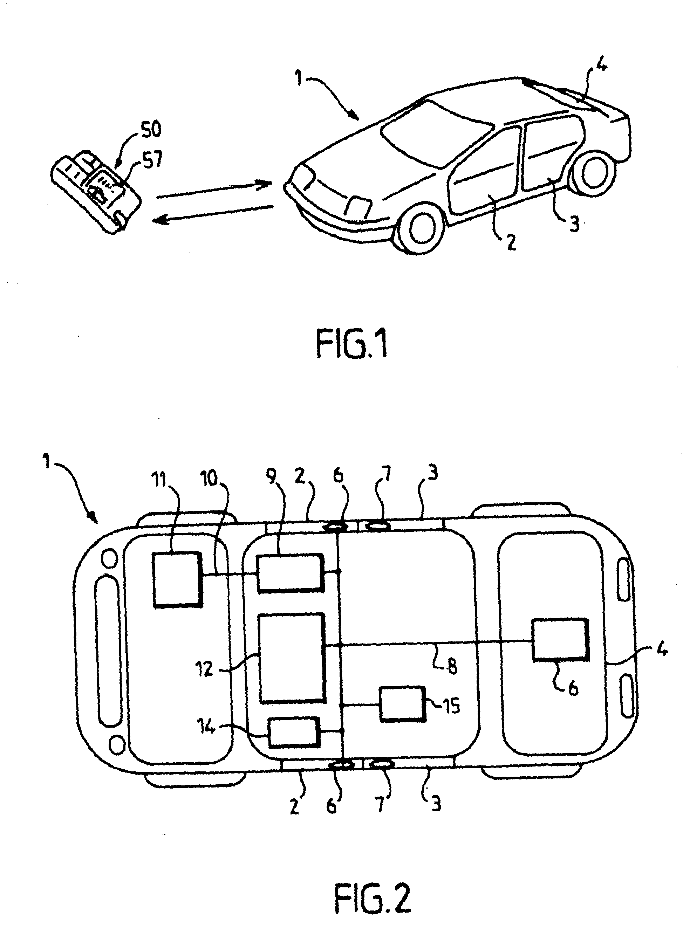

En référence aux figures 1 et 2, le véhicule 1 présente deux portes latérales avant 2, deux portes latérales arrière 3 et un hayon de coffre 4.

Les deux portes avant 2 et le hayon 5 présentent chacun une serrure (non représentée) pouvant être actionnée par une clé mécanique 81 dans un état verrouillé et dans un état déverrouillé. Un actionneur 6 est associé avec chaque serrure et est apte à actionner la serrure associée dans un état verrouillé ou déverrouillé. Pour cela, chaque actionneur 6 comprend par exemple un moteur électrique.

Les deux portes arrière 3 présentent chacune un organe de verrouillage (non représenté) et un actionneur 7 associé. Les organes de verrouillage des portes arrière 3 ne sont pas actionnables par la clé mécanique 81. Les actionneurs 6 et 7 peuvent également être aptes à faire monter ou descendre la vitre de la porte associée.

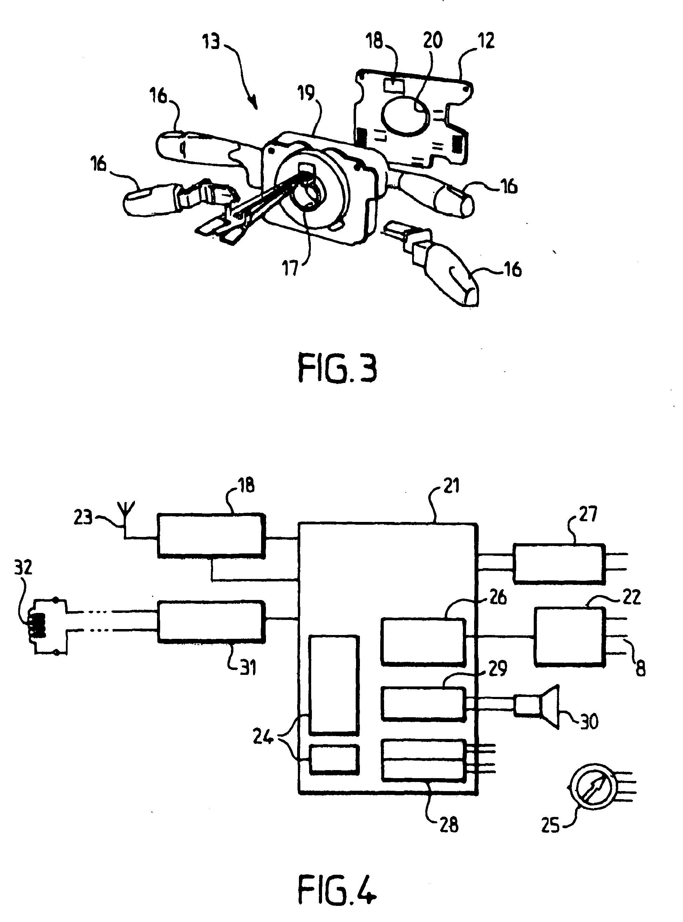

Le véhicule 1 comprend une unité de commande centrale 9, reliée aux actionneurs 6 et 7 par un réseau 8, par exemple un réseau multiplexé. L'unité de commande 9 est également reliée par une liaison protégée 10 à une unité de contrôle moteur 11. La communication sur la liaison 10 entre l'unité de commande 9 et l'unité de contrôle moteur 11 est cryptée. Un module électronique 12 qui, comme représenté sur la figure 3, est intégré à un module de colonne de direction 13, est également relié à l'unité de commande 9 par le réseau 8.

L'unité de commande 9 est également reliée par le réseau 8 à des afficheurs 14 agencé sur le tableau de bord pour indiquer au conducteur la valeur de paramètres de fonctionnement du véhicule et à des capteurs 15 aptes à mesurer la valeur des paramètres de fonctionnement du véhicule 1.

La figure 3 représente le module de colonne de direction 13. Le module 13 comprend un boîtier 19 auquel sont fixées des manettes de commande 16 des phares, des clignotants, des essuie-glaces,...Le boîtier 19 présente un alésage 17 permettant le passage de la colonne de direction du véhicule. Le module électronique 12 est intégré dans le boîtier 19 et présente un alésage 20 pour le passage de la colonne de direction.

La figure 4 représente schématiquement le module électronique 12. Le module 12 comporte un émetteur-récepteur radiofréquence 18 relié d'une part à un micro-contrôleur 21 et d'autre part à une antenne 23 de type antenne brin. Le micro-contrôleur 21 comprend une unité de communication série 26 grâce à laquelle il est relié au réseau 8 par l'intermédiaire d'un pilote de bus 22. Le micro-contrôleur 21 comprend une interface d'entrée 24 pour l'acquisition de signaux en provenance des manettes 16, de capteurs d'angle de volant 25, de l'autoradio,...Le module 12 comporte également un organe de régulation de la tension d'alimentation 27, un quartz et un circuit RC (non représentés) reliés aux entrées correspondantes 28 du micro-contrôleur 21 pour former respectivement un oscillateur haute et basse fréquence. Le micro-contrôleur 21 comprend un module de gestion du son relié à des haut-parleurs agencés dans l'habitacle du véhicule 1. Le module 12 comporte également un module d'anti-démarrage 31 relié d'une part au micro-contrôleur 21 et d'autre part à une bobine de couplage 32. Comme indiqué par les traits interrompus, la bobine de couplage 32 n'est pas agencée sur le module 12. La bobine 32 est agencée à proximité du contacteur d'allumage du véhicule 1.

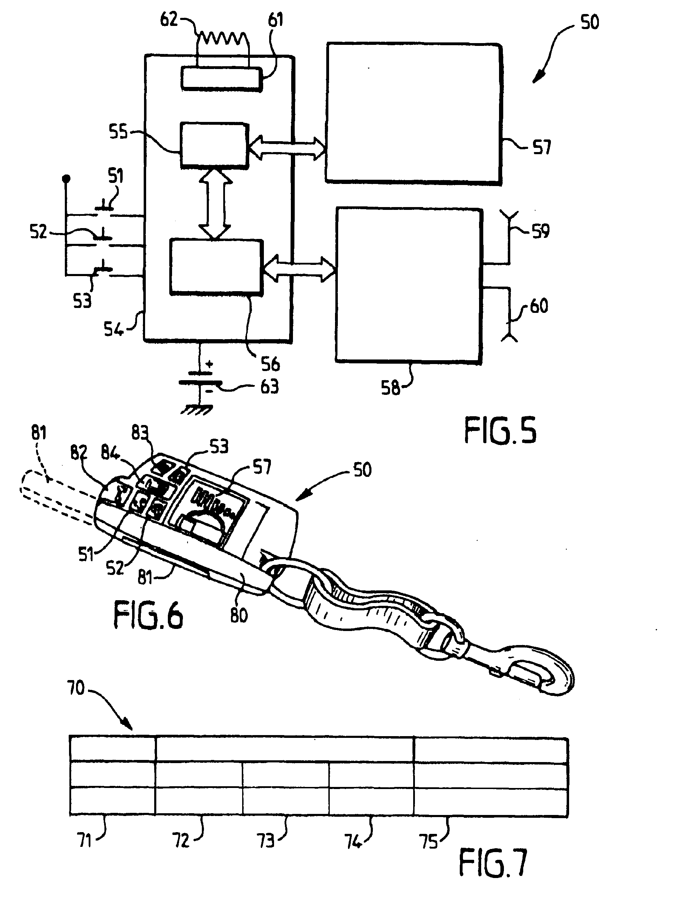

Le système d'accès du véhicule 1 comprend une télécommande 50 destinée à être portée par un utilisateur. La télécommande 50 est visible sur la figure 1 et est représentée plus en détail sur les figures 5 et 6.

La télécommande 50 comprend un boîtier 80 et une clé mécanique 81 escamotable dans le boîtier 80. La clé 81 est destinée à coopérer avec les serrures des portes avant 2 et du coffre 4 et avec le contacteur d'allumage du véhicule 1. Sur la figure 6, la clé 81 est représentée dans sa position escamotée. Un bouton 82 permet de faire passer la clé 81 en position déployée.

La télécommande 50 est équipée d'un bouton de déverrouillage 51 des portes, d'un bouton de verrouillage 52 et d'un bouton de déverrouillage 53 du hayon de coffre. La télécommande est également équipée d'un bouton d'allumage 83 et d'une molette de navigation 84. Les boutons 51, 52, 53 et 83 et la molette 84 sont reliés à un micro-contrôleur 54 agencé à l'intérieur du boîtier 80. Le micro-contrôleur 54 comporte notamment une mémoire de donnée 55 et une unité de communication 56. Un écran d'affichage 57 est agencé sur une face du boîtier 80 et est relié au micro-contrôleur 54. A l'intérieur du boîtier 80, la télécommande 50 comprend également un émetteur-récepteur radiofréquence 58 relié d'une part au micro-contrôleur 54 et d'autre part à une antenne d'émission 59 de type antenne brin et une antenne de réception 60 de type antenne boucle. Une batterie d'alimentation 63 permet d'alimenter ces différents éléments. La télécommande 50 comprend un module d'anti-démarrage 61 relié à une bobine de couplage 62 formant un transpondeur passif.

L'écran d'affichage 57 est un écran à cristaux liquide apte à afficher des symboles correspondant à des informations représentatives d'un état verrouillé ou déverrouillé des serrures du véhicule 1 et de la valeur de paramètres de fonctionnement du véhicule 1. La molette 84 permet de commander le micro-contrôleur 56 de manière à afficher sur l'écran 57 des symboles correspondant à une sélection particulière parmi les informations disponibles. Cette sélection est par exemple réalisée par navigation à l'aide de la molette 84 dans des menus affichés sur l'écran 57.

Alternativement ou en complément, on pourrait prévoir sur la télécommande 50 d'autres moyens pour indiquer à l'utilisateur l'état verrouillé ou déverrouillé des serrures du véhicule 1 et la valeur de paramètres de fonctionnement du véhicule 1, par exemple des diodes électroluminescentes, un générateur de vibration, un générateur de son,...

Les paramètres de fonctionnement comprennent :
- un état ouvert ou fermé des portes 2 et 3 et du hayon 4, un état ouvert ou fermé d'une vitre, un état d'un capteur d'intrusion ou de présence, ce qui permet de s'assurer de la sécurité du véhicule ;
- un niveau d'huile, une pression de pneu, un kilométrage du véhicule, un niveau de carburant, une consommation moyenne, une autonomie restante, un état dégonflé d'un pneu, ce qui permet de déterminer qu'un plein ou un entretien est à prévoir ;
- une température de l'habitacle du véhicule, un état actif ou inactif d'un système de climatisation, une relation entre une température de l'habitacle et une consigne de température d'un système de climatisation, ce qui permet d'obtenir des informations sur le confort du véhicule.

Dans un autre mode de réalisation, les paramètres de fonctionnement pourraient comprendre un état ouvert ou fermé d'un toit amovible du véhicule, un état de la batterie du véhicule, un niveau de liquide de nettoyage des vitres, un état allumé ou éteint d'un organe d'émission de lumière, un état démarré ou arrêté du moteur, une position géographique du véhicule, un état d'un avertisseur sonore.

Bien entendu, les paramètres de fonctionnement pourraient ne comprendre que certains de paramètres cités ci-dessus et d'autres paramètres.

Les valeurs des paramètres de fonctionnement sont communiquées à l'unité de commande 9 par les capteurs 15. Certains capteurs 15 peuvent être intégrés dans les actionneurs 6 ou 7, par exemple dans le cas des capteurs de l'état verrouillé ou déverrouillé de la serrure ou de l'organe de verrouillage, de l'état ouvert ou fermé de la porte ou du hayon, et l'état ouvert ou fermé de la vitre associés à l'actionneur dans lequel ils sont intégrés.

L'émetteur-récepteur 18 et l'émetteur-récepteur 58 permettent d'établir une communication bi-directionnelle, par exemple une communication semi-duplex, entre le micro-contrôleur 54 et l'unité de commande 9, par l'intermédiaire du micro-contrôleur 21 et du réseau 8. Cette communication est effectuée avec une fréquence porteuse dans la bande UHF, par exemple à une fréquence porteuse de 315 MHz, 434 MHz, 868 MHz ou 916 MHz. A ces fréquences, la portée de la communication peut être nettement supérieure à 30 mètres, par exemple la portée peut être de quelques centaines de mètres. Grâce à cette communication bi-directionnelle, le micro-contrôleur 54 et l'unité de commande peuvent échanger des messages sous la forme de trame numérique, dont un exemple est représenté sur la figure 7. La trame 70 comprend un champ d'identification 71 de 24 bits, incluant le numéro d'identification de la télécommande, un champ de vérification 72 de 4 bits, incluant une somme de vérification d'intégrité, un champ de bouton 73 de deux bits, incluant une identification du bouton qui a été actionné, un champ inutilisé 74, de deux bits, et des champs de données 75 de 32 bits, pour la transmission des informations relatives à l'état des serrures et aux paramètres de fonctionnements.

On va maintenant décrire le fonctionnement du système d'accès à télécommande du véhicule 1.

Quand l'utilisateur se trouve dans l'habitacle du véhicule 1, il peut insérer et tourner la clé mécanique de la télécommande 50 dans le contacteur d'allumage du véhicule 1. Dans ce cas, un couplage électromagnétique est réalisé entre les bobines 32 et 62, créant une liaison sans fil de courte portée entre les organes anti-démarrage 31 et 61. Grâce à ce couplage, de manière connue, l'organe anti-démarrage 31 envoie de l'énergie à l'organe anti-démarrage 61, qui n'est pas alimenté par la batterie 63. Ensuite, l'organe 61 communique à l'organe 31 un code numérique préenregistré. Ce code est communiqué à l'unité de commande 9 qui vérifie qu'il correspond au code préenregistré dans une mémoire de l'unité de commande 9. Si c'est le cas, l'unité de commande 9 autorise l'unité contrôle moteur 11 à démarrer le moteur.

Lorsque l'utilisateur est à l'extérieur de l'habitacle du véhicule, il peut prendre connaissance de l'état des serrures et de la valeur des paramètres de fonctionnement en manipulant la molette 84 et en regardant l'écran 57 de la télécommande 50.

Quand l'utilisateur appuie sur le bouton verrouillage 52, le micro-contrôleur 54 envoie un message de commande de verrouillage à l'unité de commande 9, par la communication bi-directionnelle. Quand l'unité de commande 9 reçoit ce message, elle commande aux actionneurs 6 et 7 de verrouiller leur serrure ou organe de verrouillage associé. Ensuite l'unité de commande 9 envoie, par la communication bidirectionnelle, au micro-contrôleur 54, un message d'acquittement incluant des informations sur l'état des serrures et organes de verrouillage, et sur la valeur des paramètres de fonctionnement. Le micro-contrôleur 54 met alors à jour ces informations dans la mémoire 55 et sur l'écran d'affichage 57. Ainsi, l'utilisateur peut vérifier sur l'écran d'affichage 57 qu'il a bien verrouillé son véhicule et constater la valeur des paramètres de fonctionnement. Après s'être éloigné du véhicule d'une distance supérieure à la portée de la communication bi-directionnelle, il peut regarder l'écran 57 pour constater par exemple que son véhicule est en sécurité, qu'un plein ou un entretien est à prévoir, ... Si l'utilisateur prend l'habitude de systématiquement commander un verrouillage lorsqu'il s'éloigne du véhicule, les informations pouvant être affichées sur l'écran 57 seront systématiquement mise à jour.

Dans un mode de réalisation alternatif, le message d'acquittement n'inclut qu'une partie des informations sur la valeur des paramètres de fonctionnement ou aucune de ces informations. Ainsi, la quantité d'information à transmettre est moins importante. Notamment, lorsqu'on fait remonter des informations sur les paramètres de fonctionnement vers la télécommande sous la forme d'un message d'acquittement en réponse à la commande des serrures, les informations les plus utiles seront celles qui sont normalement stables pendant les périodes d'inoccupation du véhicule (état des serrures, niveaux de liquide, etc.) En effet, d'autres informations qui sont susceptibles de changer pendant les périodes d'inoccupation du véhicule (température de l'habitacle par exemple) sont pertinentes surtout s'il est possible d'opérer leur mise à jour dans la télécommande à longue distance du véhicule car, en l'absence d'une telle mise à jour, il n'est pas possible de garantir la pertinence de la valeur mémorisée dans la télécommande.

Dans certains cas, l'unité de commande 9 peut décider de ne pas verrouiller les serrures quand elle reçoit un message de commande de verrouillage. Ce peut être le cas par exemple quand une des portes 2 ou 3 est ouverte. Dans ce cas, grâce au message d'acquittement, l'utilisateur pourra constater sur l'écran 57 que les serrures n'ont pas été verrouillées et qu'une porte est ouverte. Il pourra donc agir en conséquence. Ce peut également être le cas quand la clé mécanique est insérée dans le contacteur d'allumage du véhicule 1.

Quand l'utilisateur appuie sur le bouton déverrouillage 51 des portes, le micro-contrôleur 54 envoie un message de commande de déverrouillage des portes à l'unité de commande 9. Quand l'unité de commande 9 reçoit ce message, elle commande aux actionneurs 6 et 7 des portes 2 et 3 de déverrouiller leur serrure ou organe de verrouillage associé. Ensuite l'unité de commande 9 envoie au micro-contrôleur 54 un message d'acquittement incluant les informations sur l'état des serrures et organes de verrouillage, et sur la valeur des paramètres de fonctionnement.

Quand l'utilisateur appuie sur le bouton déverrouillage 53 du hayon de coffre 4, le micro-contrôleur 54 envoie un message de commande de déverrouillage du coffre à l'unité de commande 9. Quand l'unité de commande 9 reçoit ce message, elle commande à l'actionneur 6 du coffre de déverrouiller sa serrure associée. Ensuite l'unité de commande 9 envoie au micro-contrôleur 54 un message d'acquittement incluant les informations sur l'état des serrures et organes de verrouillage, et sur la valeur des paramètres de fonctionnement.

Si la batterie 63 est déchargée, il n'est pas possible de verrouiller ou déverrouiller les serrures en appuyant sur les boutons 51, 52 ou 53. L'utilisateur peut utiliser la clé mécanique 81 de la télécommande 50 pour actionner une des serrures. Dans ce cas, l'unité de commande 9 détecte qu'une serrure a été actionnée grâce au capteur 15, et peut commander l'actionnement conjoint des autres serrures et organes de verrouillage. Dans une variante, quand elle détecte qu'une serrure a été actionnée, l'unité de commande 9 envoie au micro-contrôleur 54 un message d'acquittement incluant les informations sur l'état des serrures et organes de verrouillage, et sur la valeur des paramètres de fonctionnement. Ainsi, si l'utilisateur a utilisé la clé 81 alors que la batterie 63 n'est pas déchargée, ces informations sont mises à jour dans la télécommande 50.

Quand, grâce aux capteurs 15, l'unité de commande 9 détecte qu'une intrusion a eu lieu, que la température de consigne du système de climatisation a été atteinte, ou qu'un pneu est dégonflé ou crevé, elle envoie au micro-contrôleur 54 un message d'alerte incluant au moins des informations sur la valeur du paramètre de fonctionnement correspondant. Ainsi, si à cet instant l'utilisateur portant la télécommande 50 est situé à une distance du véhicule 1 inférieure à la portée de la communication bi-directionnelle, il sera automatiquement informé des ces événements par la mise à jour des informations correspondantes sur l'écran 57. Si l'utilisateur est plus éloigné, les informations seront mises à jour lorsqu'il sera de nouveau situé à une distance du véhicule 1 inférieure à la portée de la communication bi-directionnelle et qu'il actionnera un des boutons 51, 52 ou 53.

Quand l'utilisateur appuie sur le bouton d'allumage 83, le micro-contrôleur 54 envoie un message de commande d'allumage à l'unité de commande 9. Quand l'unité de commande 9 reçoit ce message, elle commande l'allumage temporaire des phares du véhicule 1. Dans un mode de réalisation, l'unité de commande 9 envoie ensuite au micro-contrôleur 54 un message d'acquittement incluant les informations sur l'état des serrures et organes de verrouillage, et sur la valeur des paramètres de fonctionnement. Ainsi, l'utilisateur peut demander la mise à jour des informations sur l'écran 57 sans provoquer un verrouillage ou un déverrouillage des serrures.

Alternativement au mode de réalisation qui vient d'être décrit, un système d'accès à télécommande pourrait présenter au moins certaines des différences suivantes.

Dans un mode de réalisation alternatif, la télécommande 50 comprend également un bouton statut. Dans ce cas, quand l'utilisateur appuie sur le bouton statut, le micro-contrôleur 54 envoie un message de requête d'information à l'unité de commande 9. Quand l'unité de commande 9 reçoit ce message, elle envoie au micro-contrôleur 54 un message d'actualisation d'informations incluant les informations sur l'état des serrures et organes de verrouillage, et sur la valeur des paramètres de fonctionnement. Ainsi, l'utilisateur peut demander la mise à jour des informations sur l'écran 57 sans provoquer un verrouillage ou un déverrouillage des serrures ni un allumage temporaire des phares.

A la place des boutons 51 et 52, la télécommande pourrait présenter un unique bouton de commande de serrure. Dans ce cas, quand l'utilisateur appuie sur le bouton de commande de serrure, le micro-contrôleur 54 envoie un message de commande de serrure à l'unité de commande 9. Quand l'unité de commande 9 reçoit ce message, elle commande aux actionneurs 6 et 7 de verrouiller leur serrure ou organe de verrouillage associé s'il est déverrouillé et inversement. Ensuite l'unité de commande 9 envoie au micro-contrôleur 54 un message d'acquittement incluant les informations sur l'état des serrures et organes de verrouillage, et sur la valeur des paramètres de fonctionnement.

Les boutons 51, 52, 53 et 83 pourraient être remplacé par tout organe actionnable par un utilisateur. Par exemple, l'écran 57 pourrait être un écran tactile dont trois zones correspondraient aux trois boutons.

Le système d'accès à télécommande pourrait comporter plus d'une télécommande, pour permettre à plusieurs utilisateurs d'utiliser le véhicule.

Dans le mode de réalisation décrit, les fonctions réalisées par l'unité de commande 9 et le micro-contrôleur 21 sont implémentées sous la forme de logiciels spécifiques dans des modules électroniques génériques. La répartition des fonctions entre ces deux modules électroniques peut être modifiée, de même qu'il peut y avoir plus ou moins de modules électroniques. De plus, les mêmes fonctions pourraient être réalisées par un ou des module(s) électronique(s) spécifique(s), au moins en partie.

## Revendications

1. Système d'accès à télécommande pour véhicule automobile (1) comportant au moins un ouvrant (2, 3, 4) incluant une serrure et permettant l'accès à un espace intérieur du véhicule, des moyens de commande de serrure embarqués reliés à ladite serrure, des moyens de télécommunication embarqués (18, 23) reliés auxdits moyens de commande de serrure embarqués, et une télécommande (50) destinée à être portée par un utilisateur, ladite télécommande incluant des moyens de télécommunication de télécommande (58, 59, 60) aptes à établir une communication bi-directionnelle avec lesdits moyens de télécommunication embarqués, au moins un organe de commande (51, 52, 53, 83) actionnable par un utilisateur pour provoquer l'émission de messages de télécommande incluant au moins des messages de commande de serrure par lesdits moyens de télécommunication de télécommande à destination desdits moyens de télécommunication embarqués,
lesdits moyens de commande de serrure embarqués étant aptes à actionner ladite serrure dans un état verrouillé ou dans un état déverrouillé en réponse à la réception d'un dit message de commande de serrure,
ledit système comportant des moyens de commande de réponse embarqués aptes à provoquer l'émission par lesdits moyens de télécommunication embarqués à destination desdits moyens de télécommunication de télécommande d'une information d'état serrure relative à l'état actuel de ladite serrure en réponse à la réception d'un dit message de télécommande,
ladite télécommande incluant des moyens de signalisation (57) aptes à émettre un signal perceptible par ledit utilisateur en fonction de ladite information d'état serrure pour signaler l'état actuel de la serrure,
lesdits moyens de commande de réponse étant reliés à une instrumentation embarquée (15) de manière à recevoir des informations de fonctionnement relatives à au moins un paramètre de fonctionnement du véhicule,
lesdits moyens de commande de réponse embarqués étant aptes à provoquer l'émission par lesdits moyens de télécommunication embarqués à destination desdits moyens de télécommunication de télécommande desdites informations de fonctionnement en réponse à la réception d'au moins certains desdits messages de télécommande, lesdits moyens de signalisation étant aptes à émettre un signal perceptible par ledit utilisateur en fonction desdites informations de fonctionnement pour signaler la valeur actuelle dudit au moins un paramètre de fonctionnement,
lesdits moyens de commande de réponse embarqués étant aptes à provoquer l'émission par lesdits moyens de télécommunication embarqués à destination desdits moyens de télécommunication de télécommande d'au moins ladite information d'état serrure sous la forme d'un message d'acquittement en réponse à la réception d'un dit message de commande de serrure,
**caractérisé par le fait que**
ladite télécommande inclut une clé mécanique (81) apte à coopérer avec ladite serrure pour verrouiller et/ou déverrouiller ladite serrure et/ou avec un contacteur d'allumage du véhicule,
lesdits moyens de commande de réponse embarqués étant aptes à provoquer l'émission par lesdits moyens de télécommunication embarqués à destination desdits moyens de télécommunication de télécommande d'au moins ladite information d'état serrure sous la forme d'un message d'acquittement en réponse à un verrouillage ou un déverrouillage de ladite serrure par ladite clé mécanique.

2. Système selon la revendication 1, **caractérisé par le fait que** ledit au moins un paramètre de fonctionnement est choisi dans le groupe constitué d'un état ouvert ou fermé dudit au moins un ouvrant, un état ouvert ou fermé d'une vitre, un état ouvert ou fermé d'un toit amovible, un niveau d'huile, une pression de pneu, un kilométrage du véhicule, un niveau de carburant, une consommation moyenne, une autonomie restante, une température du véhicule, un état actif ou inactif d'un système de climatisation, une relation entre une température de l'habitacle et une consigne de température d'un système de climatisation, un état d'un capteur d'intrusion ou de présence, un état de pression d'un pneu, un niveau de liquide de nettoyage des vitres, un état allumé ou éteint d'un organe d'émission de lumière, un état démarré ou arrêté du moteur, une position géographique du véhicule, un état d'un avertisseur sonore, et un état de la batterie du véhicule.

3. Système selon la revendication 1 ou la revendication 2, **caractérisé par le fait que** ledit message d'acquittement inclut au moins une partie desdites informations de fonctionnement.

4. Système selon l'une des revendications précédentes, **caractérisé par le fait que** ladite télécommande inclut au moins un organe de commande de serrure (51, 52, 53) actionnable par un utilisateur pour provoquer l'émission dudit au moins un message de commande de serrure par lesdits moyens de télécommunication de télécommande à destination desdits moyens de télécommunication embarqués,
et un organe de commande de requête d'information (83) actionnable par un utilisateur pour provoquer l'émission d'un message de requête d'information par lesdits moyens de télécommunication de télécommande à destination desdits moyens de télécommunication embarqués, ledit message de requête d'information étant distinct dudit au moins un message de commande de serrure, lesdits moyens de commande de réponse embarqués étant aptes à provoquer l'émission par lesdits moyens de télécommunication embarqués à destination desdits moyens de télécommunication de télécommande d'un message d'actualisation d'information incluant au moins une partie desdites informations de fonctionnement en réponse à la réception dudit message de requête d'information.

5. Système selon la revendication 4, **caractérisé par le fait que** ladite télécommande inclut un organe de commande de verrouillage de serrure (52) actionnable par un utilisateur pour provoquer l'émission d'un message de commande de verrouillage de serrure par lesdits moyens de télécommunication de télécommande à destination desdits moyens de télécommunication embarqués, et un organe de commande de déverrouillage de serrure (51, 53) actionnable par un utilisateur pour provoquer l'émission d'un message de commande de déverrouillage serrure par lesdits moyens de télécommunication de télécommande à destination desdits moyens de télécommunication embarqués.

6. Système selon la revendication 4 ou la revendication 5, **caractérisé par le fait que** ledit message d'actualisation d'information inclut ladite information d'état serrure.

7. Système selon l'une quelconque des revendications 1 à 6, **caractérisé par le fait qu'**il comporte un organe d'anti-démarrage embarqué (31) relié à une unité de commande moteur (11), ladite unité de commande moteur étant apte à empêcher ou autoriser le démarrage du moteur du véhicule en fonction d'un état dudit organe d'anti-démarrage embarqué, ladite télécommande incluant un organe d'anti-démarrage de télécommande (61) apte à coopérer par une liaison sans fil avec ledit organe d'anti-démarrage embarqué pour modifier l'état dudit organe d'anti-démarrage embarqué.

8. Système selon l'une quelconque des revendications 1 à 7, **caractérisé par le fait que** lesdits moyens de télécommunication embarqués incluent au moins une antenne d'émission et de réception (23) reliée à un émetteur-récepteur radiofréquence (18) agencé sur un module électronique situé le long de la colonne de direction dudit véhicule.

9. Système selon l'une quelconque des revendications 1 à 8, **caractérisé par le fait que** lesdits moyens de télécommunication de télécommande incluent une antenne d'émission (59) et une antenne de réception (60) reliées à un émetteur-récepteur radiofréquence (58).

10. Système selon l'une quelconque des revendications 1 à 9, **caractérisé par le fait que** ladite communication bi-directionnelle est effectuée avec une fréquence porteuse comprise dans la bande UHF.

11. Système selon l'une quelconque des revendications 1 à 10, **caractérisé par le fait que** ledit au moins un élément de signalisation est choisi dans le groupe constitué par un écran d'affichage (57), une diode électroluminescente, un générateur de vibration, un générateur de son.

12. Système selon l'une quelconque des revendications 1 à 11, **caractérisé par le fait que** les moyens de commande de serrure et les moyens de commande de réponse sont réalisés sous la forme d'un ou plusieurs module(s) électronique(s) (9, 21) reliés à un réseau de communication embarqué du véhicule (8, 10).

13. Système selon la revendication 12, **caractérisé par le fait que** ledit réseau embarqué est un réseau multiplexé (8).

14. Système selon l'une quelconque des revendications 1 à 13, **caractérisé par le fait que** lesdits moyens de commande de réponse embarqués sont aptes à provoquer l'émission par lesdits moyens de télécommunication embarqués à destination desdits moyens de télécommunication de télécommande de messages de réponse incluant au moins une partie desdites informations de fonctionnement en réponse à un changement de valeur d'un desdits paramètres de fonctionnement.

## Claims

1. Remote control access system for automobile vehicle (1) comprising at least one door (2, 3, 4) including a lock and permitting access to an interior space of the vehicle, on-board lock control means connected to said lock, on-board telecommunications means (18, 23) connected to said on-board lock control means, and a remote control unit (50) designed to be carried by a user, said remote control unit including remote control telecommunications means (58, 59, 60) capable of establishing two-way communication with said on-board telecommunications means, at least one control member (51, 52, 53, 83) that can be actuated by a user to cause the transmission of remote control messages including at least lock control messages by said remotecontrol telecommunications means to said on-board telecommunications means,
said on-board lock control means being capable of actuating said lock in a locked state or in an unlocked state in response to the reception of a said lock control message,
said system comprising on-board response control means capable of causing the transmission by said on-board telecommunications means to said remote control telecommunications means of lock state information relating to the current state of said lock in response to the reception of a said remote control message,
said remote control unit including signalling means (57) capable of transmitting a signal that can be perceived by said user as a function of said lock state information in order to signal the current state of the lock,
said response control means being connected to on-board instrumentation (15) so as to receive operational information relating to at least one operational parameter of the vehicle,
said on-board response control means being capable of causing the transmission by said on-board telecommunications means to said remote control telecommunications means of said operational information in response to the reception of at least some of said remote control messages,
said signalling means being capable of transmitting a signal that can be perceived by said user as a function of said operational information in order to signal the current value of said at least one operational parameter,
said on-board response control means being capable of causing the transmission by said on-board telecommunications means to said remote control telecommunications means of at least said lock state information in the form of a message of acknowledgement in response to the reception of a said lock control message,
**characterised in that**
said remote control unit includes a mechanical key (81) capable of cooperating with said lock to lock and/or unlock said lock and/or with a vehicle ignition switch,
said on-board response control means being capable of causing the transmission by said on-board telecommunications means to said remotecontrol telecommunications means of at least said lock state information in the form of a message of acknowledgement in response to locking or unlocking of said lock by said mechanical key.

2. System according to claim 1, **characterised in that** said at least one operational parameter is selected from the group consisting of an open or closed state of said at least one door, an open or closed state of a window, an open or closed state of a detachable roof, an oil level, a tyre pressure, a vehicle mileage, a fuel level, an average consumption, a remaining range, a vehicle temperature, an active or inactive state of an air conditioning system, a ratio between a passenger compartment temperature and a temperature setting of an air conditioning system, a state of an intrusion or occupancy sensor, a pressure state of a tyre, a window cleaning liquid level, an on or off state of a light emitting member, a started or stopped state of the engine, a geographical position of the vehicle, a state of a horn, and a vehicle battery state.

3. System according to claim 1 or claim 2, **characterised in that** said message of acknowledgement includes at least part of said operational information.

4. System according to any of the preceding claims, **characterised in that** said remote control unit includes at least one lock control member (51, 52, 53) that can be actuated by a user to cause the transmission of said at least one lock control message by said remote control telecommunications means to said on-board telecommunications means,
and an information request control member (83) that can be actuated by a user to cause the transmission of an information request message by said remote control telecommunications means to said on-board telecommunications means, said information request message being distinct from said at least one lock control message, said on-board response control means being capable of causing the transmission by said on-board telecommunications means to said remote control telecommunications means of an information update message including at least part of said operational information in response to the reception of said information request message.

5. System according to claim 4, **characterised in that** said remote control unit includes a lock locking control member (52) that can be actuated by a user to cause the transmission of a lock locking control message by said remote control telecommunications means to said on-board telecommunications means, and a lock unlocking control member (51, 53) that can be actuated by a user to cause the transmission of a lock unlocking control message by said remote control telecommunications means to said on-board telecommunications means.

6. System according to claim 4 or claim 5, **characterised in that** said information update message includes said lock state information.

7. System according to any of claims 1 to 6, **characterised in that** it comprises an on-board ignition lock member (31) connected to an engine control unit (11), said engine control unit being capable of preventing or authorising starting of the vehicle engine as a function of a state of said on-board ignition lock member, said remote control unit including a remote control ignition lock member (61) capable of cooperating by a wireless link with said on-board ignition lock member to modify the state of said on-board ignition lock member.

8. System according to any of claims 1 to 7, **characterised in that** said on-board telecommunications means include at least one transmitting and receiving aerial (23) connected to a radio-frequency transmitter-receiver (18) arranged on an electronic module situated along the steering column of said vehicle.

9. System according to any of claims 1 to 8, **characterised in that** said remote control telecommunications means include a transmitting aerial (59) and a receiving aerial (60) connected to a radio-frequency transmitter-receiver (58).

10. System according to any of claims 1 to 9, **characterised in that** said two-way communication is effected with a carrier frequency in the UHF band.

11. System according to any of claims 1 to 10, **characterised in that** said at least one signalling element is selected from the group consisting of a display screen (57), a light-emitting diode, a vibration generator, and a sound generator.

12. System according to any of claims 1 to 11, **characterised in that** the lock control means and the response control means are constructed in the form of one or more electronic module(s) (9, 21) connected to an on-board communications network of the vehicle (8, 10).

13. System according to claim 12, **characterised in that** said on-board network is a multiplex network (8).

14. System according to any of claims 1 to 13, **characterised in that** said on-board response control means are capable of causing the transmission by said on-board telecommunications means to said remote control telecommunications means of response messages including at least part of said operational information in response to a change in value of one of said operational parameters.

## Patentansprüche

1. Zugangssystem mittels Fernbedienung für Kraftfahrzeuge (1), das Folgendes umfasst: wenigstens eine Tür (2, 3, 4), die ein Schloss aufweist und Zugang zu einem Innenraum des Fahrzeugs gewährt, mit dem genannten Schloss verbundene On-Board-Schlosssteuermittel, mit den genannten On-Board-Schlosssteuermitteln verbundene On-Board-Telekommunikationsmittel (18, 23) und eine Fernbedienung (50) zum Tragen durch einen Benutzer, wobei die genannte Fernbedienung Folgendes beinhaltet: Fernbedienungstelekommunikationsmittel (58, 59, 60) zum Herstellen einer bidirektionalen Kommunikation mit den genannten On-Board-Telekommunikationsmitteln, wenigstens einen Steuermechanismus (51, 52, 53, 83), der von einem Benutzer betätigt werden kann, um das Aussenden von Fernbedienungsmeldungen, die wenigstens Schlosssteuermeldungen enthalten, durch die genannten Fernbedienungstelekommunikationsmittel zu den genannten On-Board-Telekommunikationsmitteln zu bewirken,
wobei die genannten On-Board-Schlosssteuermittel das genannte Schloss als Reaktion auf den Empfang einer genannten Schlosssteuermeldung in einen Verriegelungs- oder einen Entriegelungszustand stellen können,
wobei das genannte System On-Board-Antwortsteuermittel umfasst, die das Aussenden einer Schlosszustandsinformation in Bezug auf den aktuellen Zustand des genannten Schlosses als Reaktion auf den Empfang einer Fernbedienungsmeldung durch die genannten On-Board-Telekommunikationsmittel zu den genannten Fernbedienungstelekommunikationsmitteln bewirken können, wobei die genannte Fernbedienung Signalisierungsmittel (57) zum Aussenden eines von dem genannten Benutzer wahrnehmbaren Signals in Abhängigkeit von der genannten Schlosszustandsinformation beinhaltet, um den aktuellen Zustand des Schlosses zu signalisieren,
wobei die genannten Antwortsteuermittel mit einer instrumentellen On-Board-Ausrüstung (15) zum Empfangen von Betriebsinformationen in Bezug auf wenigstens einen Betriebsparameter des Fahrzeugs verbunden sind,
wobei die genannten On-Board-Antwortsteuermittel das Aussenden der genannten Betriebsinformationen als Reaktion auf den Empfang wenigstens bestimmter der genannten genannten Fernbedienungsmeldungen durch die genannten On-Board-Telekommunikationsmittel zu den genannten Fernbedienungstelekommunikationsmitteln bewirken können,
wobei die genannten Signalisierungsmittel ein von dem genannten Benutzer wahrnehmbares Signal in Abhängigkeit von den genannten Betriebsinformationen aussenden können, um den aktuellen Wert des genannten wenigstens einen Betriebsparameters zu signalisieren,
wobei die genannten On-Board-Antwortsteuermittel das Aussenden von wenigstens der genannten Schlosszustandsinformation in Form einer Bestätigungsmeldung als Reaktion auf den Empfang einer Schlosssteuermeldung durch die genannten On-Board-Telekommunikationsmittel zu den genannten Fernbedienungstelekommunikationsmitteln bewirken können,
**dadurch gekennzeichnet, dass**
die genannte Fernbedienung einen mechanischen Schlüssel (81) beinhaltet, der mit dem genannten Schloss zum Ver- und/oder Entriegeln des genannten Schlosses und/oder mit einem Zündschalter des Fahrzeugs zusammenwirken kann,
wobei die genannten On-Board-Antwortsteuermittel das Aussenden von wenigstens der genannten Schlosszustandsinformation in Form einer Bestätigungsmeldung als Reaktion auf ein Ver- oder Entriegeln des genannten Schlosses mit dem genannten mechanischen Schlüssel durch die genannten On-Board-Telekommunikationsmittel zu den genannten Fernbedienungstelekommunikationsmitteln bewirken können.

2. System nach Anspruch 1, **dadurch gekennzeichnet, dass** der genannte wenigstens eine Betriebsparameter ausgewählt ist aus der Gruppe bestehend aus dem Öffnungs- oder Schließzustand der genannten wenigstens einen Tür, dem Öffnungs- oder Schließzustand eines Fensters, dem Öffnungs- oder Schließzustand eines beweglichen Dachs, dem Ölstand, dem Reifendruck, dem Kilometerstand des Fahrzeugs, dem Kraftstoffstand, dem mittleren Verbrauch, der Restreichweite, der Temperatur des Fahrzeugs, dem Aktiv- oder Inaktivzustand der Klimaanlage, dem Verhältnis zwischen der Temperatur des Fahrgastraums und der Einstelltemperatur der Klimaanlage, dem Zustand eines Einbruchs- oder Anwesenheitsdetektors, dem Reifendruckzustand, dem Scheibenwaschflüssigkeitsstand, dem Ein- oder Ausschaltzustand eines Beleuchtungsmechanismus, dem Ein- oder Ausschaltzustand des Motors, der geografischen Position des Fahrzeugs, dem Zustand eines akustischen Warngeräts und dem Zustand der Fahrzeugbatterie.

3. System nach Anspruch 1 oder Anspruch 2, **dadurch gekennzeichnet, dass** die genannte Bestätigungsmeldung wenigstens einen Teil der genannten Betriebsinformationen enthält.

4. System nach einem der vorherigen Ansprüche, **dadurch gekennzeichnet, dass** die genannte Fernbedienung wenigstens einen Schlosssteuermechanismus (51, 52, 53) beinhaltet, der von einem Benutzer betätigt werden kann, um das Aussenden wenigstens der genannten Schlosssteuermeldung durch die genannten Fernbedienungstelekommunikationsmittel zu den genannten On-Board-Telekommunikationsmitteln zu bewirken,
und einen Informationsanforderungssteuermechanismus (83), der von einem Benutzer betätigt werden kann, um das Aussenden einer Informationsanforderungsmeldung durch die genannten Fernbedienungstelekommunikationsmittel zu den genannten On-Board-Telekommunikationsmitteln zu bewirken, wobei sich die genannte Informationsanforderungsmeldung von der genannten wenigstens einen Schlosssteuermeldung unterscheidet, wobei die genannten On-Board-Antwortsteuermittel das Aussenden einer Informationsaktualisierungsmeldung, die wenigstens einen Teil der genannten Betriebsinformationen enthält, als Reaktion auf den Empfang der genannten Informationsanforderungsmeldung durch die genannten On-Board-Telekommunikationsmittel zu den genannten Fernbedienungstelekommunikationsmitteln bewirken können.

5. System nach Anspruch 4, **dadurch gekennzeichnet, dass** die genannte Fernbedienung einen Schlossverriegelungssteuermechanismus (52), der von einem Benutzer betätigt werden kann, um das Aussenden einer Schlossverriegelungssteuermeldung durch die genannten Fernbedienungstelekommunikationsmittel zu den genannten On-Board-Telekommunikationsmitteln zu bewirken, und einen Schlossentriegelungssteuermechanismus (51, 53) beinhaltet, der von einem Benutzer betätigt werden kann, um das Aussenden einer Schlossentriegelungssteuermeldung durch die genannten Fernbedienungstelekommunikationsmittel zu den genannten On-Board-Telekommunikationsmitteln zu bewirken.

6. System nach Anspruch 4 oder Anspruch 5, **dadurch gekennzeichnet, dass** die genannte Informationsaktualisierungsmeldung die genannte Schlosszustandsinformation enthält.

7. System nach einem der Ansprüche 1 bis 6, **dadurch gekennzeichnet, dass** es einen On-Board-Anlasssperrmechanismus (31) umfasst, der mit einer Motorsteuereinheit (11) verbunden ist, wobei die genannte Motorsteuereinheit das Anlassen des Motors des Fahrzeugs je nach einem Zustand des genannten On-Board-Anlasssperrmechanismus verhindern oder zulassen kann, wobei die genannte Fernbedienung einen Fernbedienungs-Anlasssperrmechanismus (61) beinhaltet, der über eine drahtlose Verbindung mit dem genannten On-Board-Anlasssperrmechanismus zusammenwirken kann, um den Zustand des genannten On-Board-Anlasssperrmechanismus zu modifizieren.

8. System nach einem der Ansprüche 1 bis 7, **dadurch gekennzeichnet, dass** die genannten On-Board-Telekommunikationsmittel wenigstens eine Sende- und Empfangsantenne (23) beinhaltet, die mit einem an einem elektronischen Modul, das sich an der Lenksäule des genannten Fahrzeugs befindet, montierten Funkfrequenz-Sender/Empfänger (18) verbunden ist.

9. System nach einem der Ansprüche 1 bis 8, **dadurch gekennzeichnet, dass** die genannten Fernbedienungstelekommunikationsmittel eine Sendeantenne (59) und eine Empfangsantenne (60) aufweisen, die mit einem Funkfrequenz-Sender/Empfänger (58) verbunden ist.

10. System nach einem der Ansprüche 1 bis 9, **dadurch gekennzeichnet, dass** die genannte bidirektionale Kommunikation mit einer Trägerfrequenz innerhalb des UHF-Bandes erfolgt.

11. System nach einem der Ansprüche 1 bis 10, **dadurch gekennzeichnet, dass** das genannte wenigstens eine Signalisierungselement ausgewählt ist aus der Gruppe bestehend aus einem Anzeigeschirm (57), einer Leuchtdiode, einem Vibrationsgenerator und einem Tongenerator.

12. System nach einem der Ansprüche 1 bis 11, **dadurch gekennzeichnet, dass** die Schlosssteuermittel und die Antwortsteuermittel in Form von einem oder mehreren elektronischen Modul(en) (9, 21) realisiert sind, das/die mit einem On-Board-Kommunikationsnetz des Fahrzeugs (8, 10) verbunden ist/sind.

13. System nach Anspruch 12, **dadurch gekennzeichnet, dass** das genannte Bordnetz ein multiplexiertes Netz (8) ist.

14. System nach einem der Ansprüche 1 bis 13, **dadurch gekennzeichnet, dass** die genannten On-Board-Antwortsteuermittel das Aussenden von Antwortmeldungen, die wenigstens einen Teil der genannten Betriebsinformationen enthalten, als Reaktion auf eine Änderung des Wertes von einem der genannten Betriebsparameter durch die genannten On-Board-Telekommunikationsmittel zu den genannten Fernbedienungstelekommunikationsmitteln bewirken können.
